# EUROPÄISCHE PATENTSCHRIFT

(11) **EP 1 635 980 B1**
(45) Veröffentlichungstag und Bekanntmachung des Hinweises auf die Patenterteilung: **05.04.2017**
(21) Anmeldenummer: 04739514.0
(22) Anmeldetag: 02.06.2004
(51) Int. Cl.: B23K 11/31, B23K 11/11, B23K 11/25

(54) **VERFAHREN ZUR STEUERUNG UND/ODER REGELUNG EINER SCHWEISSZANGENBEWEGUNG**
METHOD FOR CONTROLLING AND/OR ADJUSTING THE MOVEMENT OF AN ELECTRODE HOLDER
PROCEDE POUR COMMANDER ET/OU REGULER UN MOUVEMENT D'UNE PINCE PORTE-ELECTRODE

(30) Priorität: 25.06.2003 DE 10328593
(43) Veröffentlichungstag der Anmeldung: 22.03.2006
(73) Patentinhaber: SWAC Electronic GMBH, CH-6303 Zug (CH)
(72) Erfinder: SCHMITT-WALTER, Stefan, 82041 Oberhaching (DE)
(74) Vertreter: Grünecker Patent- und Rechtsanwälte PartG mbB
(86) Internationale Anmeldenummer: PCT/EP2004/005934
(87) Internationale Veröffentlichungsnummer: WO 2004/113011

(56) Entgegenhaltungen:
- WO-A1-02/078892
- US-A- 5 091 623
- US-A- 5 988 486

## Beschreibung

Die Erfindung betrifft ein Verfahren zur Steuerung und/oder Regelung einer Schweißzangenbewegung mittels eines Schweißzangenantriebs, welcher zumindest eine Primär- und eine Sekundärantriebseinrichtung aufweist, wobei die Primärantriebseinrichtung wenigstens zwei Schweißzangenschenkel mit Schweißelektroden von im wesentlichen gegenüberliegenden Seiten an ein Schweißobjekt heranführt und mit vorbestimmter Druckkraft an dieses preßt und wobei die Sekundärantriebseinrichtung bei ihrer Betätigung eine räumliche Lage der Schweißzange insbesondere der Schweißzangenschenkel bestimmt.

Solche Schweißzangen werden beispielsweise bei der Automobilherstellung eingesetzt, um Bleche als Schweißobjekt miteinander zu verschweißen. In der Regel weisen solche Schweißzangen zwei Schweißzangenschenkel auf, die C-oderX-förmig angeordnet sind. Durch Betätigen der Primärantriebseinrichtung werden die Schweißzangenschenkel einander angenähert und schließlich auf unterschiedlichen Seiten an das Schweißobjekt angepreßt. Das eigentliche Schweißen kann dabei punktförmig durch Widerstandsschweißen, Laserstrahlschweißen, Lichtbogenschweißen oder dergleichen erfolgen.

Für die Schweißzange ist weiterhin eine Sekundärantriebseinrichtung vorgesehen, durch die beispielsweise der sogenannte Zangenausgleich erfolgt. Dieser verhindert bei Bewegungen der gesamten Schweißeinrichtung ein ungewolltes Ändern der Raumachse der Schweißzange.

Außerdem wird die Sekundärantriebseinrichtung auch dazu verwendet, bei Schließen der Schweißzange und Kontaktieren des Schweißobjekts für einen Ausgleich der auftretenden Kräfte zu sorgen.

Bei bisher bekannten Verfahren wird in der Regel ein starrer Schweißzangenschenkel durch lineare Bewegung per Luft oder elektromotorisch zum Ausgleich der Kräfte entspannt oder weiter an das Schweißobjekt herangeführt. Allerdings erfolgt dies durch eine nicht kontrollierte Bewegung des starren Schweißzangenschenkels. Beispielsweise kann das Kontaktieren des Schweißobjekts durch den starren Schweißzangenschenkel nicht erfaßt werden und insbesondere unkorrekte Raumlagen von Schweißobjekt zu Schweißzange sind damit nicht erfaßbar. Dies führt zu einer Unsicherheit beim Verschweißen, die mit den steigenden Qualitätsanforderungen an jede Verschweißung nicht vereinbar ist.

Die US 5,988,486 A verwendet einen Strom zum Erfassen eines Kontakts einer Elektrode mit dem Schweißobjekt. Sobald eine Schweißspitze das Objekt kontaktiert, werden beide Schweißzangenschenkel durch eine entsprechende Antriebseinheit verschwenkt, um den entsprechenden Scheißdruck aufzubauen.

Die US 5,091,623 A offenbart Elektroden an freien Enden entsprechender Schweißzangenarme, die durch einen Roboterarm bewegbar sind. Ein Antrieb wird so lange betätigt, bis eine Elektrode das Objekt kontaktiert und anschließend wird eine weitere Antriebseinrichtung betrieben bis das Schweißobjekt durch den anderen Elektrodenarm kontaktiert wird.

Die WO 02/078892 A1 offenbart eine nach dem Prinzip einer X-Zange betätigbare Schweißzange. Ein oberer und ein unterer Schweißzangenschenkel sind jeweils um eine gemeinsame Schwenkachse schwenkbar. Eine erste elektromotorische Antriebseinheit ist mit beiden Schweißzangenschenkeln verbunden und eine zweite elektromotorische Antriebseinheit ist nur mit dem unteren Schweißzangenschenkel verbunden. Zum Heranführen des unteren Schweißzangenschenkels an das Schweißobjekt wird die zweite elektromotorische Antriebseinheit zunächst mit einem Startstrom beaufschlagt, bis eine bestimmte Annäherungsgeschwindigkeit erreicht ist. Dann wird der Strom auf einem Wert gehalten, der lediglich ausreicht, um Reibungsverluste der Bewegung zu kompensieren, so dass die Annäherungsgeschwindigkeit beibehalten wird. Trifft nun der untere Schweißzangenschenkel auf das Schweißobjekt, wird die zweite elektromotorische Antriebseinheit weiterhin mit dem betreffenden Stromwert beaufschlagt, so dass dann zunächst der untere Schweißzangenschenkel lediglich mit dem Haltestrom an dem Schweißobjekt gehalten wird.

Der Erfindung liegt die Aufgabe zugrunde, ein Verfahren zur Steuerung und/oder Regelung der Schweißzangenbewegung dahingehend zu verbessern, dass auch das Kontaktieren des Schweißobjekts durch die Schweißzange kontrolliert erfolgt und eventuelle Abweichungen von vorgegebenen Raumpunkten beim Kontaktieren sicher erfasst werden.

Diese Aufgabe wird durch die Merkmale des Patentanspruchs 1 gelöst.

Erfindungsgemäß erfolgt ein Heranfahren der Schweißzange an einen bestimmten Raumpunkt. Dieser ist beispielsweise durch einen entsprechenden Schweißpunkt am Schweißobjekt vorgegeben. Während des Heranfahrens wird die Schweißzange in einer festen räumlichen Lage gehalten, wobei diese räumliche Lage relativ zum anzufahrenden Raumpunkt ebenfalls erfasst wird. Ist der Raumpunkt erreicht, wird durch die Sekundärantriebseinrichtung wenigstens ein Zangenschenkel bewegt, bis er das Schweißobjekt kontaktiert. Dabei wird nicht nur das Kontaktieren selbst erfasst, sondern auch der entsprechende Kontaktort über Bewegung der Sekundärantriebseinrichtung, die vorangehend genannte feste räumliche Lage sowie den bestimmten Raumpunkt. Je nach erfasstem Kontaktpunkt kann eine Korrektur beispielsweise der räumlichen Lage der Schweißzange erfolgen, so dass anschließend ein sicheres Schließen der Schweißzange durch die Primärantriebseinrichtung unter Aufbau eines entsprechenden Schweißdrucks möglich ist und die Verschweißung allen Qualitätsanforderungen genügt.

Da das Kontaktieren mittels der Sekundärantriebseinrichtung genau erfassbar ist, erfolgt kein Prallschlag eines Schweißzangenschenkels relativ zum Schweißobjekt, durch den gegebenenfalls eine Beschädigung des Schweißobjekts erfolgen könnte oder durch den zumindest der Lärmpegel erhöht ist. Außerdem kann eine Blechverformung durch nicht gleichmäßigen Schweißdruck vermieden werden. Es besteht sogar die Möglichkeit, dass eine Dicke des Schweißobjekts erfasst und insbesondere eine Blechdickenerkennung im Moment des Kontaktierens und bei Schließen der Schweißzange durchgeführt wird.

Erfindungsgemäß wird dabei auch ein Auftreffen bzw. Kontaktieren des Schweißobjekts erfasst, bei dem das Kontaktieren unter einem Winkel zur Flächennormalen im Kontaktpunkt erfolgt, d.h. wenn die entsprechende Schweißelektrode nicht genau vertikal relativ zum Schweißpunkt herangeführt wird. Nach Beendigen des Heranfahrens und noch vor Kontaktieren des Schweißobjekts mittels zumindest eines Schweißzangenschenkels wird der anliegende Haltestrom der Sekundärantriebseinrichtung mit Vorzeichen erfasst. Dabei ist zu beachten, dass einem beliebigen Raumpunkt immer ein bestimmter Haltestrom der Sekundärantriebseinrichtung entspricht, der je nach resultierenden Kraftvektor (Druck oder Zug) ein positives oder negatives Vorzeichen hat. Dabei ist noch zu beachten, dass der Haltestrom weiterhin noch von der verwendeten Schweißzange abhängen kann. Durch die Beziehung zwischen Haltestrom und Raumpunkt ist es vorteilhafterweise möglich, den Haltestrom um einen bestimmten Kontaktierstromwert zu variieren, so dass mittels der Sekundärantriebseinrichtung eine weitere Annäherung der Schweißzange an das Schweißobjekt und den bestimmten Raumpunkt zum Setzen des Schweißpunkts erfolgen kann. Diese Annäherung erfolgt bis zum Erfassen des Kontakts durch wenigstens einen Schweißzangenschenkel.

Die Schweißzange wird erfindungsgemäß durch übliche Bewegungseinrichtungen an den bestimmten Raumpunkt relativ zum Schweißobjekt herangeführt. Solche Bewegungseinrichtungen sind entsprechende Handhabungsautomaten oder dergleichen und beispielsweise auch Robotereinrichtungen. Durch eine solche Robotereinrichtung wird die Schweißzange nach entsprechender Programmierung an jeden der Raumpunkte zur anschließenden Verschweißung herangeführt.

Um in einfacher Weise die Bewegung bzw. Verstellung von Primär- und Sekundärantriebseinrichtung insbesondere gesteuert durchführen zu können, können Primär- und/oder Sekundärantriebseinrichtung elektromotorisch betrieben werden. Ein Beispiel in diesem Zusammenhang ist insbesondere ein Servomotor mit entsprechenden Getrieben zur Umsetzung einer rotatorischen Bewegung in eine translatorische, wie beispielsweise Kugelumlaufspindeln oder dergleichen.

Um günstigerweise das Halten der Schweißzange in der festen räumlichen Lage während des Heranfahrens durchführen zu können und gleichzeitig Informationen über die räumliche Lage zu erhalten, kann die Sekundärantriebseinrichtung unterschiedlich in Höhe und Richtung bestromt werden. Dadurch wird während der Bewegung der Schweißzange beispielsweise mittels der Robotereinrichtung die starre räumliche Lage bzw. Relativposition zur Robotereinrichtung oder auch zum Schweißobjekt beibehalten. Gleichzeitig ergibt sich durch Höhe und Richtung der Bestromung eine Information über die räumliche Lage.

Ein entsprechender Haltestrom ergibt sich ebenfalls für die Primärantriebseinrichtung, wobei dieser Haltestrom allerdings nicht für die Lage der Schweißzange im Raum oder den angefahrenen Raumpunkt bedeutsam ist.

Da der Kontaktierstromwert abhängig vom jeweiligen Raumpunkt und der räumlichen Lage der Schweißzange sein kann, kann der Kontaktierstromwert vorteilhafterweise experimentell für im Wesentlichen jeden Raumpunkt ermittelt werden. Es besteht allerdings auch die Möglichkeit, dass für alle Raumpunkte und räumlichen Lagen jeweils ein bestimmter Kontaktierstromwert verwendet wird.

Da je nach Raumpunkt und räumlicher Lage der Schweißzange die in der Sekundärantriebseinrichtung auftretenden Reibungskräfte unterschiedlich sein können, wird der entsprechende Kontaktierstromwert zumindest so groß gewählt, dass er zum Überwinden der Reibungskräfte (Bewegungseinleitung) in Abhängigkeit von Raumpunkt, räumlicher Lage und jeweils verwendeter Schweißzange gewählt wird.

In diesem Zusammenhang kann es sich als vorteilhaft erweisen, wenn gegebenenfalls der Kontaktierstromwert kurzzeitig um einen vorbestimmten Faktor zum Erreichen eines Losbrechmoments zur Einleitung der Bewegung der Schweißzange mittels Sekundärantriebseinrichtung erhöht wird. Dieses dient beispielsweise zur Überwindung des sogenannten Stick-Slip Effekts zum Einleiten der Bewegung bei entsprechenden Lagern für die Schweißzange.

Es besteht dabei die Möglichkeit, dass das Losbrechmoment ebenfalls abhängig von der verwendeten Schweißzange, vom Raumpunkt oder der räumlichen Lage der Schweißzange ist und erfindungsgemäß beispielsweise so gesteuert werden kann, dass der Kontaktierstromwert nur für eine bestimmte Zeit und/oder einen bestimmten Bewegungsweg der Sekundärantriebseinrichtung erhöht wird.

Erfindungsgemäß erfolgt die Regelung der Bewegung der Sekundärantriebseinrichtung dabei vorteilhafterweise nicht oder zumindest nicht nur über eine Positionsbestimmung, sondern über die Bestimmung des Stroms, wobei vorteilhafterweise auch das Kontaktieren des wenigstens einen Schweißzangenschenkels durch Überwachung des der Sekundärantriebseinrichtung zugeführten Stroms erfolgen kann.

Da in diesem Zusammenhang die Bewegung durch die Sekundärantriebseinrichtung im Wesentlichen durch den geringen Kontaktierstromwert erfolgt, kann das Kontaktieren sanft und ohne mechanische Verformung am Schweißobjekt erfolgen. Dabei ist zu beachten, dass der Kontaktierstromwert in der Regel im Bereich von Milliampere liegt.

Eine einfache Möglichkeit zum Erfassen des Kontaktierens mittels des Stroms kann darin gesehen werden, dass ein sogenannter Schleppfehler im überwachten Strom festgestellt wird. Dieser ergibt sich in der Regel durch eine Differenz zwischen Positions- oder Lage-Istwert und entsprechendem Sollwert für die Sekundärantriebseinrichtung.

Nach entsprechender Erfassung des Kontaktierens und gegebenenfalls Ausrichtung der Schweißzange relativ zum Schweißobjekt, kann dann sicher ein komplettes Schließen der Schweißzange durch die Primärantriebseinrichtung stattfinden, und der für ein Punktschweißen mit ausreichender Qualität notwendige Schweißdruck aufgebracht werden kann. Dieser beträgt in der Regel einige kN und insbesondere bis zu etwa fünf kN.

Erfindungsgemäß ist in analoger Weise ebenfalls ein Öffnen der Schweißzange bzw. ein anschließendes Anfahren eines weiteren Schweißpunktes steuer- und/oder regelbar. Dazu können beispielsweise vor Anfahren eines weiteren Schweißpunktes bzw. auch nach Beendigung des Schweißens die Schweißschenkel mittels Primärantriebseinrichtung geöffnet und anschließend die Schweißzange mittels Sekundärantriebseinrichtung an einen vorbestimmten Ausgangsraumpunkt bewegt werden. Dieser Ausgangsraumpunkt kann der oben genannten festen räumlichen Lage während des Heranfahrens an einen entsprechenden Schweißpunkt entsprechen. Nach Erreichen dieses Ausgangsraumpunktes und bei entsprechender räumlicher Lage der Schweißzange kann dann durch beispielsweise die Robotereinrichtung der nächste Schweißpunkt angefahren werden, an dem dann in bereits beschriebener Weise wieder ein Kontaktieren überwacht wird.

Um automatisch beim erfindungsgemäßen Verfahren entsprechende Raumpunkte immer korrekt anfahren zu können, können Abweichungen an vorgegebenen Raumpunkten des Schweißobjekts bzw. der entsprechenden Schweißpunkte mittels Steuer- und/oder Regeleinrichtung der Sekundärantriebseinrichtung und/oder der Primärantriebseinrichtung erfaßt und an eine Auswerteeinrichtung zur Qualitätssicherung übermittelt werden. Eine solche Abweichung von einem vorgegebenen Raumpunkt ist beispielsweise dadurch erfaßbar, dass ein Vergleich zwischen Kontaktpunkt und zugehörigen Raumpunkt erfolgt und bei fehlender Übereinstimmung von Kontaktpunkt und Raumpunkt eine entsprechende Abweichung bestimmt wird. Diese kann sich beispielsweise durch unkorrekte Raumlagen des zu schweißenden Schweißobjekts und/oder der programmierten Lage der Robotereinrichtung ergeben.

Entsprechende Abweichungen können allerdings auch dadurch auftreten, dass ein Elektrodenverschleiß stattgefunden hat. Ein solcher Elektrodenverschleiß ergibt sich beim Widerstandsschweißen beispielsweise, wenn bei verzinktem Stahlblech als Schweißobjekt eine Legierungsbildung zwischen geschmolzenem Zink und Kupfer der Schweißelektroden stattfindet. Dabei ergibt sich durch die körperliche Änderung der Schweißelektrode eine Abweichung von Kontaktpunkt und zugehörigem Raumpunkt. Diese kann erfindungsgemäß korrigiert werden. Weiterhin ist zu beachten, dass die Standzeiten der Schweißelektroden beispielsweise durch Elektrodenfräsen, durch das diese entsprechende Legierungsbildung beseitigt wird, erhöht wird, aber durch das Elektrodenfräsen wiederum eine körperliche Änderung der Schweißelektroden erfolgt, die zu einer entsprechenden Abweichung von Kontaktpunkt und Raumpunkt, siehe die obigen Ausführungen, führt. Auch eine solche Abweichung kann erfindungsgemäß erfaßt und kompensiert werden.

Die Erfassung solcher körperlichen Änderungen erfolgt erfindungsgemäß dabei so genau und zuordbar, dass entsprechende körperliche Änderung der jeweiligen Elektrode bzw. dem jeweiligen Schweißzangenschenkel zugeordnet werden können. Folglich ergibt sich erfindungsgemäß die Möglichkeit, dass körperliche Änderungen der Schweißelektroden oder Teilen davon durch Verschleiß, Abtragen von Material, Verlust einer Schweißelektrode oder Teilen davon oder dergleichen beim Kontaktieren des Schweißobjekts oder der Schweißelektroden direkt miteinander erfaßt werden können.

Erfindungsgemäß besteht ebenfalls die Möglichkeit, dass solche körperlichen Änderungen zur Korrektur des oben genannten Ausgangsraumpunktes herangezogen werden und/oder an die Auswerteeinrichtung übermittelt werden. Eine solche Übermittlung dient ebenfalls zur Qualitätssicherung und kann beispielsweise herangezogen werden, um durch Meldung an eine zugeordnete Stelle einen Kappenaustausch oder ein Kappenfräsen zu veranlassen.

Insgesamt dient dabei das erfindungsgemäße Verfahren im Rahmen der Qualitätssicherung sowohl zur Qualitätsprüfung, Qualitätsüberwachung als auch Qualitätsregelung.

Da die Schweißzange an der Robotereinrichtung um eine Schwenkachse verschwenkbar gelagert ist, weist die Sekundärantriebseinrichtung einen Antrieb auf, der entsprechend den Schwenkwinkel um diese Schwenkachse ändert. Dabei wird die Schweißzange im Wesentlichen nur in einer Ebene bewegt, welche sich senkrecht zur Schwenkachse erstreckt. Es ist allerdings ebenfalls möglich, dass zwei oder mehr Antriebe bei der Sekundärantriebseinrichtung verwendet werden, um bei entsprechender Lagerung der Schweißzange an der zugehörigen Bewegungseinrichtung diese innerhalb im Wesentlichen eines Halbraums zu verschwenken.

Es sei noch angemerkt, dass je nach Ausführung der Antriebseinrichtungen sowie deren Anordnung und Bewegung durch entsprechende Bewegungseinrichtungen weitere Parameter neben insbesondere Strom gemessen und verändert werden können, um Raumpunkt und räumliche Lage festzustellen und gegebenenfalls ändern zu können, wobei dies Betätigungszustand der entsprechenden Antriebe der Antriebseinrichtungen und/oder Position dieser Antriebseinrichtungen sein können.

Weiterhin, siehe auch die vorangehenden Ausführungen, können erfindungsgemäß neben beispielsweise einer Blechdickenerkennung bei Verschweißen von Blechen oder anderen Abstandsmessungen der entsprechenden Schweißzangenschenkel durch Messung des Stroms ein Kraftprofil für das Schließen der Schweißzange und während des Verschweißens bestimmt werden.

Im Folgenden wird das erfindungsgemäße Verfahren anhand der beigefügten Figur näher erläutert.

Es zeigt:

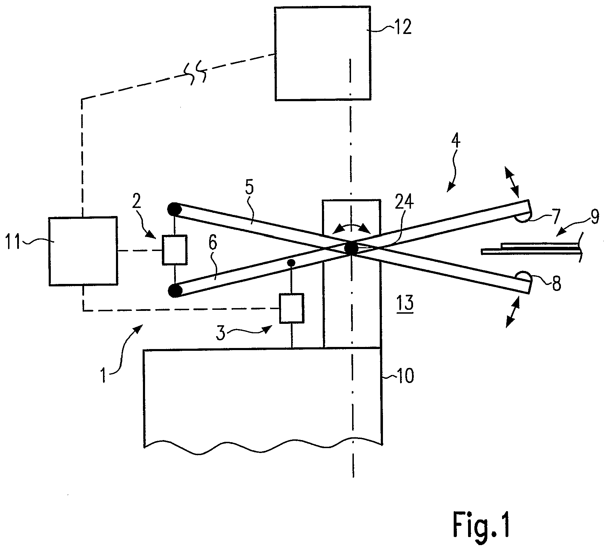

- Figur 1: eine Seitenansicht einer Schweißzange mit entsprechendem Antrieb.

In Figur 1 ist eine X-förmige Schweißzange 4 mit zwei Schweißzangenschenkeln 5 und 6 dargestellt. Diese sind um eine Schwenkachse 24 verschwenkbar. Die Schwenkachse 24 ist an einer Robotereinrichtung 10 als Bewegungseinrichtung für die Schweißzange 4 ausgebildet. Zum Verschwenken um die Schwenkachse 24 ist der Schweißzange 4 eine Sekundärantriebseinrichtung 3 zugeordnet. Zum Verschwenken der Schweißzangenschenkel 5, 6 relativ zueinander ist zwischen diesen eine Primärantriebseinrichtung 2 angeordnet.

Primär- und Sekundärantriebseinrichtung 2, 3 sind beispielsweise durch elektromotorische Antriebe, wie beispielsweise Servomotore gebildet.

An den der Primärantriebseinrichtung 2 gegenüberliegenden Enden der Schweißzangenschenkel 5, 6 sind entsprechende Schweißelektroden 7, 8 angeordnet. Diese sind durch Betätigen der Primärantriebseinrichtung 2 von gegenüberliegenden Seiten an ein Schweißobjekt 9 in Form von beispielsweise zwei miteinander zu verschweißenden Blechen heranführbar.

Durch die Sekundärantriebseinrichtung 3 ist die Schweißzange 4 relativ zur Robotereinrichtung 10 starr anordbar, d.h. in ihrer Position oder räumlichen Lage fixierbar. Mittels der Primärantriebseinrichtung 2 kann in diesem Zusammenhang noch eine Bewegung eines Schweißzangenschenkels 5 durchgeführt werden, der relativ zu dem von der Sekundärantriebseinrichtung 3 fixierten Schweißzangenschenkel 6 bewegbar ist.

Zur Steuerung und/oder Regelung der Antriebseinrichtungen 2, 3 sind diese mit einer Steuer-/Regeleinrichtung 11 verbunden. Durch diese erfolgt beispielsweise eine Messung der Bestromung der Antriebseinrichtungen in Höhe und Vorzeichen, eine Erfassung der Drehzahlen der entsprechenden Antriebe der Antriebseinrichtungen sowie weiterer Parameter. Außerdem erfolgt von der Steuer-/Regeleinrichtung 11 eine Übermittlung entsprechender Daten an eine gegebenenfalls entfernt angeordnete Auswerteeinrichtung 12. Die Übertragung der Daten kann in diesem Zusammenhang über eine Kabelverbindung aber auch drahtlos erfolgen.

Bei einem weiteren Ausführungsbeispiel der Schweißzange 4 kann die Sekundärantriebseinrichtung 3 beispielsweise zwei Antriebe aufweisen, die nicht nur die Schweißzange 4 in der Figurenebene um Schwenkachse 24 verschwenken, sondern auch senkrecht zur Papierebene verschwenken, so dass die Schweißzange 4 mit den entsprechenden Schweißelektroden 7, 8 im Wesentlichen im Halbraum 13 verschwenkbar ist.

Erfindungsgemäß können insbesondere drei Parameter der Schweißzange gemessen werden, wobei dies Strom, Drehzahl und Position sind. Diese drei Parameter werden nicht nur gemessen, sondern zum Betrieb der Schweißzange entsprechend geändert. Durch die Robotereinrichtung 10 erfolgt ein Heranführen der Schweißzange 4 an das Schweißobjekt 9. Während dieses Heranführens wird die Sekundärantriebseinrichtung 3 so gesteuert bzw. geregelt, dass die Schweißzange 4 in einer festen räumlichen Lage angeordnet ist. Dazu erfolgt eine Bestromung des elektromotorischen Antriebs der Sekundärantriebseinrichtung 3 in entsprechender Höhe und Richtung.

Nach Heranführen der Schweißzange 4 an das Schweißobjekt 9 wird die Bewegung der Robotereinrichtung 10 unterbrochen, so dass diese bezüglich aller Achsen, in der Regel 6 oder 7 Achsen, die Geschwindigkeit Null aufweist. Dabei ist die Schweißzange 4 in einer bestimmten räumlichen Lage und an einem bestimmten Raumpunkt angeordnet. Diesem entspricht ein definierter Haltestrom der Sekundärantriebseinrichtung, der je nach resultierendem Kraftvektor - durch Druck oder Zug - ein positives oder negatives Vorzeichen hat. Dies gilt analog auch für den Haltestrom der Primärantriebseinrichtung 2.

Um die Schweißzangenschenkel 5, 6 einander anzunähern und mit wenigstens einer Schweißelektrode 7, 8 das Schweißobjekt 9 zu kontaktieren, wird die Sekundärantriebseinrichtung 3 zusätzlich mit einem Kontaktierstromwert beaufschlagt. Dieser wird relativ zum Haltestrom ermittelt und mit diesem vektoriell addiert.

Damit eine Bewegung des oder der Schweißzangenschenkel 5, 6 erfolgen kann, ist der Kontaktierstromwert gerade so groß, dass entsprechende Reibungskräfte der jeweils eingesetzten Schweißzange 4 überwunden werden. Die Reibungskräfte können dabei unterschiedlich für jeden Raumpunkt sein, so dass gegebenenfalls unterschiedliche Kontaktierstromwerte je nach Raumpunkt verwendet werden.

Zur Einleitung der Bewegung des oder der Schweißzangenschenkel 5, 6 wird dabei der Kontaktierstromwert kurzzeitig um einen bestimmten Faktor erhöht, um ein ausreichendes Losbrechmoment hinsichtlich des sogenannten Stick-slip Effekts zu erreichen. Dieser erhöhte Kontaktierstromwert wird für eine bestimmte Zeit oder auch für einen bestimmten Verstellweg der Sekundärantriebseinrichtung 3 zugeführt.

Mittels des zugeführten Stroms und insbesondere aufgrund des sogenannten Schleppfehlers wird dann durch die Steuer-/Regeleinrichtung 11 ein Kontaktieren des Schweißobjekts 9 durch eine Schweißelektrode 7, 8 durch entsprechende Betätigung der Sekundärantriebseinrichtung 3 erfaßt. Da der Kontaktierstromwert nur im Bereich von Milliampere ist, erfolgt eine solche Detektion sanft und ohne mechanische Verformung des Schweißobjekts.

Es sei noch darauf hingewiesen, dass durch die Sekundärantriebseinrichtung 3 auch der Zangenausgleich stattfindet, d.h. während des Schweißvorgangs bei geschlossener und an das Schweißobjekt 9 angedrückten Schweißelektrode 7, 8 ein Ausgleich der auftretenden Kräfte erfolgt.

Die beim Verschweißen ausgeübten Kräfte betragen in der Regel einige kN und insbesondere bis zu 5 kN. Solche Kräfte sind für ein sicheres Punktschweißen in der Regel erforderlich.

Der Aufbau der entsprechenden Schweißdrücke erfolgt nach erfaßter Kontaktierung. Neben dem Erfassen der Kontaktierung kann analog auch eine Dicke des Schweißobjekts bzw. ein Abstand der Schweißelektroden 7, 8 erfaßt werden. Weiterhin kann der Kraftverlauf sowohl beim Kontaktieren als auch beim Verschweißen mittels der Primärund Sekundärantriebseinrichtungen 2, 3 und zugehöriger Steuer-/Regeleinrichtung 11 erfaßt und durch die Auswerteeinrichtung 12 zur Qualitätssicherung ausgewertet werden.

Um einen weiteren Schweißpunkt anzufahren, erfordert ein Öffnen der Schweißzange durch Betätigen der Primärantriebseinrichtung 2 und anschließend ein Betätigen der Sekundärantriebseinrichtung 3, damit die Schweißzange 4 in einer Ausgangslage und einem Ausgangsraumpunkt angeordnet ist, von wo beispielsweise das erste Heranführen an das Schweißobjekt erfolgte.

Die Ausgangslage oder räumliche Lage der Schweißzange 4 kann hinsichtlich bestimmter Änderungen korrigiert werden. Solche Änderungen sind beispielsweise Abnutzungen einer Schweißelektrode, Verlust einer Schweißelektrode, körperliche Veränderung einer Schweißelektrode oder dergleichen. Diese Änderungen werden ebenfalls an die Auswerteeinrichtung 12 übermittelt und können zur Wartung der Schweißzange, zur Ermittlung eines Austauschzeitpunkts einer entsprechenden Schweißelektrode oder dergleichen herangezogen werden.

## Patentansprüche

1. Verfahren zur Steuerung und/oder Regelung einer Schweißzangenbewegung mittels eines Schweißzangenantriebs (1), welcher zumindest eine Primär- und eine Sekundärantriebseinrichtung (2, 3) aufweist,
wobei die Primärantriebseinrichtung (2) wenigstens zwei Schweißzangenschenkel (5, 6) mit Schweißelektroden (7, 8) von im Wesentlichen gegenüberliegenden Seiten relativ zueinander um eine Schwenkachse (24) verschwenkt und an ein Schweißobjekt heranführt und mit vorbestimmter Druckkraft an dieses presst,
und wobei die Sekundärantriebseinrichtung (3) bei ihrer Betätigung durch Verschwenken um die Schwenkachse (24) eine räumliche Lage der Schweißzange (4) und insbesondere der Schweißzangenschenkel (5, 6) variiert, mit den folgenden Schritten:
a) Heranfahren der Schweißzange (4) an einen bestimmten Raumpunkt relativ zum Schweißobjekt (9) mittels einer Robotereinrichtung (10);
b) Halten der Schweißzange (4) in einer festen räumlichen Lage während des Heranfahrens und Erfassen eines anliegenden Haltestroms der Sekundärantriebseinrichtung (3) mit seinem Vorzeichen;
c) Betätigen der Sekundärantriebseinrichtung (3) bis zum Kontaktieren des Schweißobjekts (9) mit einem Schweißzangenschenkel (5, 6), wobei der Haltestrom um einen bestimmten Kontaktierstromwert variiert wird zur Betätigung der Sekundärantriebseinrichtung (3) zum Erstellen des Kontakts, Erfassen des Kontaktierens, sowie Erfassen des entsprechenden Kontaktorts über die Bewegung der Sekundärantriebseinrichtung (3), die feste räumliche Lage und den bestimmten Raumpunkt; und
d) Schließen der Schweißzange (4) durch die Primärantriebseinrichtung (2) unter Aufbau eines entsprechenden Schweißdrucks.

2. Verfahren nach Anspruch 1, wobei die Primär- und/oder die Sekundärantriebseinrichtung (2, 3) elektromotorisch betrieben werden.

3. Verfahren nach einem der vorangehenden Ansprüche, wobei im Schritt (b) zum Halten der Schweißzange (4) in einer starren Relativposition zur Robotereinrichtung (10) oder zum Schweißobjekt (9) die Sekundärantriebseinrichtung (3) unterschiedlich in Höhe und Richtung bestromt wird.

4. Verfahren nach Anspruch 1, wobei der Kontaktierstromwert experimentell für im wesentlichen jeden Raumpunkt ermittelt wird.

5. Verfahren nach einem der vorangehenden Ansprüche, wobei der Kontaktierstromwert zumindest ausreichend groß zum Überwinden von bei der Bewegung der jeweils verwendeten Schweißzange (4) auftretenden Reibungskräften gewählt wird.

6. Verfahren nach einem der vorangehenden Ansprüche, wobei der Kontaktierstromwert kurzzeitig um einen vorbestimmten Faktor zum Erreichen eines Losbrechmoments zur Einleitung der Bewegung der Schweißzange (4) mittels Sekundärantriebseinrichtung (3) erhöht wird.

7. Verfahren nach Anspruch 6, wobei der Kontaktierstromwert für eine bestimmte Zeit und/oder einen bestimmten Bewegungsweg der Sekundärantriebseinrichtung (3) erhöht wird.

8. Verfahren nach einem der vorangehenden Ansprüche, wobei, das Kontaktieren des wenigstens einen Schweißschenkels (5, 6) durch Überwachen des der Sekundärantriebseinrichtung (3) zugeführten Stromes erfolgt.

9. Verfahren nach Anspruch 8, **dadurch gekennzeichnet, dass** das Kontaktieren durch Erfassen eines Schleppfehlers im überwachten Strom festgestellt wird.

10. Verfahren nach einem der vorangehenden Ansprüche, wobei der Schweißdruck im Schritt (d) bis auf einige kN, insbesondere bis auf etwa 5 kN erhöht wird.

11. Verfahren nach einem der vorangehenden Ansprüche, wobei vor Anfahren eines weiteren Schweißpunktes bzw. nach Beendigung des Schweißens die Schweißzangenschenkel (5, 6) mittels der Primärantriebseinrichtung (3) geöffnet und anschließend die Schweißzange (4) mittels der Sekundärantriebseinrichtung (3) an einen vorbestimmten Ausgangsraumpunkt bewegt wird.

12. Verfahren nach einem der vorangehenden Ansprüche, wobei Abweichungen von vorgegebenen Raumpunkten des Schweißobjekts (9) bzw. der entsprechenden Schweißpunkte mittels einer Steuer- und/oder Regeleinrichtung (11) der Sekundärantriebseinrichtung (2) und/oder der Primärantriebseinrichtung (2) erfaßt und an eine Auswerteeinrichtung (12) insbesondere zur Qualitätssicherung übermittelt werden.

13. Verfahren nach einem der vorangehenden Ansprüche, wobei eine körperliche Änderung der Schweißelektroden (7, 8) oder von Teilen der Schweißelektroden durch Verschleiß, Abtragen von Material, Verlust einer Schweißelektrode oder Teilen davon oder dergleichen beim Kontaktieren des Schweißobjekts (9) oder Kontaktieren der Schweißzangenschenkel (5, 6) bzw. der Schweißelektroden (7, 8) miteinander mittels der Steuer- und/oder Regeleinrichtung (11) erfasst werden.

14. Verfahren nach Anspruch 13, wobei der Ausgangsraumpunkt hinsichtlich der körperlichen Änderungen korrigiert und/oder die Änderung an die Auswerteeinrichtung (12) übermittelt wird.

15. Verfahren nach einem der vorangehenden Ansprüche, wobei die Sekundärantriebseinrichtung (3) durch zumindest zwei Einzelantriebe der Schweißzange (4) im Wesentlichen innerhalb eines Halbraums verschwenkt wird.

## Claims

1. Method of opened or closed-loop control of the welding tong movement by a welding tong drive (1) comprising at least one primary and one secondary drive device (2, 3), wherein the primary drive device (2) pivots at least two welding tong limbs (5, 6) with welding electrodes (7, 8) from essentially opposite sides about a pivot axis (24) towards a welding object and presses the at least two welding tong limbs with a predetermined pressure force onto the welding object, and wherein the secondary drive device (3) when actuated, varies a spatial position of the welding tongs (4) and in particular of the welding tong limbs (5, 6), the method comprising the following steps:
a) approach of the welding tongs (4) at a predetermined spatial point relative to the welding object (9) by a robot device (10);
b) holding of the welding tongs (4) in a fixed spatial orientation during the approach and detecting of an applied holding current of the secondary drive device (3) with its prefix;
c) actuation of the secondary drive device (3) until contacting of the welding object (9) with one welding tong limb (5, 6), wherein the holding current is varied by a predetermined contacting current level for the actuation of the secondary drive device (3) for establishing contact, detecting the contact, and detecting of the corresponding contact position by the movement of the secondary drive device (3), the fixed spatial orientation and the predetermined spatial point, and
d) closure of the welding tong (4) by the primary drive device (2) with a build-up of a predetermined compressive force for welding.

2. Method according to claim 1, wherein primary and/or secondary drive devices (2, 3) are operated eletromotively.

3. Method according to one of the previous claims, wherein in step (b) for holding of the welding tongs (4) in a fixed spatial position relative with respect to the robot device (10) or with respect to the welding object (9) the secondary drive device (3) is provided with current different in value and direction.

4. Method according to claim 1, wherein the contacting current level is determined experimentally for essentially each spatial point.

5. Method according to one of the previous claims, wherein the contacting current level is selected to be at least sufficient to overcome friction forces occurring during movement of the correspondingly used welding tongs (4).

6. Method according to one of the previous claims, wherein the contacting current level is temporarily increased by a specified factor to achieve an initial breakaway torque for initiating the movement of the welding tongs (4) by the secondary drive device (3).

7. Method according to claim 6, wherein the contacting current level is increased for at least one of a predetermined time and/or a predetermined movement displacement of the secondary drive device (3).

8. Method according to one of the previous claims, wherein the contacting of the at least one welding tong limb (5, 6) is controlled by monitoring of the current applied to the secondary drive device (3).

9. Method according to claim 8, **characterized in that** the contacting is determined by detecting of a stick-slip effect in the monitored current.

10. Method according to one of the previous claims, wherein the welding pressure in step (d) is increased to a few kN, in particular up to about 5 kN.

11. Method according to one of the previous claims, wherein the welding tong limbs (5, 6) are opened by the primary drive device (3) before moving to a further welding point or after termination of welding and then the welding tongs (4) are moved by the secondary drive device (3) to a predetermined starting spatial point.

12. Method according to one of the previous claims, wherein deviations from specified spatial points of the welding object (9) or from corresponding welding points are acquired by an open or closed-loop control device (11) of the secondary drive device (3) and/or the primary drive device (2) and are passed to an evaluation device (12) in particular for quality assurance.

13. Method according to one of the previous claims, wherein bodily changes of the welding electrodes (7, 8) or parts of the welding electrodes due to wear, degrading of material, loss of welding electrode or parts thereof or the like are acquired on contacting the welding object (6) or contacting the welding tong limbs (5, 6) or the welding electrodes (7, 8), respectively, together by the opened or closed-loop control device (11).

14. Method according to claim 13, wherein the starting spatial point is corrected with respect to corresponding bodily changes and/or such changes are passed to the evaluation device (12).

15. Method according to one of the previous claims, wherein the secondary drive device (3) is swiveled by at least two single drives of the welding tongs (4) essentially within a hemisphere.

## Revendications

1. Procédé destiné à assurer la commande et/ou la régulation du mouvement d'une pince de soudage au moyen d'un entraînement de pince de soudage (1), qui comprend au moins un dispositif d'entraînement primaire et secondaire (2, 3),
le dispositif d'entraînement primaire (2) faisant pivoter au moins deux branches de pince de soudage (5, 6) avec des électrodes de soudage (7, 8) l'une par rapport à l'autre autour d'un axe de pivotement (24) à partir de côtés sensiblement opposés, en les amenant près d'un objet à souder et en les pressant contre celui-ci avec une force de compression prédéterminée,
et le dispositif d'entraînement secondaire (3), lors de son actionnement par pivotement autour de l'axe de pivotement (24), faisant varier une position spatiale de la pince de soudage (4) et notamment des branches de pince de soudage (5, 6),
le procédé comprenant les étapes suivantes :
a) amenée de la pince de soudage (4) à un point spatial déterminé par rapport à l'objet à souder (9) au moyen d'un système de robot (10) ;
b) maintien de la pince de soudage (24) dans une position spatiale fixe pendant l'amenée et relevé d'un courant de maintien présent du dispositif d'entraînement secondaire (3), avec son signe,
c) actionnement du dispositif d'entraînement secondaire (3) jusqu'à l'entrée en contact avec l'objet à souder (9) par une branche de pince de soudage (5, 6), le courant de maintien étant modifié d'une valeur de courant de contact déterminé pour l'actionnement du dispositif d'entraînement secondaire (3) pour l'établissement du contact, et relevé de l'entrée en contact ainsi que relevé du lieu de contact correspondant par l'intermédiaire du mouvement du dispositif d'entraînement secondaire (3), la position spatiale fixe et le point spatial déterminé ; et
d) fermeture de la pince de soudage (4) par le dispositif d'entraînement primaire (2) en établissant une pression de soudage appropriée.

2. Procédé selon la revendication 1, d'après lequel le dispositif d'entraînement primaire et/ou le dispositif d'entraînement secondaire (2, 3) fonctionnent par moteur électrique.

3. Procédé selon l'une des revendications précédentes, d'après lequel dans l'étape (b) pour le maintien de la pince de soudage (4) dans une position relative rigide par rapport au système de robot (10) ou à l'objet à souder (9), le dispositif d'entraînement secondaire (3) est alimenté en courant de manière différente en niveau et direction.

4. Procédé selon la revendication 1, d'après lequel la valeur du courant d'entrée en contact est déterminée expérimentalement sensiblement pour chaque point spatial.

5. Procédé selon l'une des revendications précédentes, d'après lequel la valeur du courant d'entrée en contact est choisie au moins suffisamment grande pour surmonter des forces de friction apparaissant lors du mouvement de la pince de soudage (4) respectivement utilisée.

6. Procédé selon l'une des revendications précédentes, d'après lequel la valeur du courant d'entrée en contact est augmentée brièvement d'un facteur prédéterminé pour atteindre un couple de démarrage destiné à initier le mouvement de la pince de soudage (4) au moyen du dispositif d'entraînement secondaire (3).

7. Procédé selon la revendication 6, d'après lequel la valeur du courant d'entrée en contact est augmentée pour un temps déterminé et/ou pour un déplacement de mouvement déterminé du dispositif d'entraînement secondaire (3).

8. Procédé selon l'une des revendications précédentes, d'après lequel l'entrée en contact de ladite au moins une branche de pince de soudage (5, 6) est effectuée par surveillance du courant fourni au dispositif d'entraînement secondaire (3).

9. Procédé selon la revendication 8, **caractérisé en ce que** l'entrée en contact est détectée par le relevé d'une erreur de poursuite dans le courant surveillé.

10. Procédé selon l'une des revendications précédentes, d'après lequel la pression de soudage dans l'étape (d) est augmentée jusqu'à quelques kN, en particulier jusqu'à environ 5 kN.

11. Procédé selon l'une des revendications précédentes, d'après lequel avant l'accostage d'un autre point de soudage ou après achèvement du soudage, les branches de pince de soudage (5, 6) sont ouvertes au moyen du dispositif d'entraînement primaire (2), et ensuite la pince de soudage (4) est déplacée au moyen du dispositif d'entraînement secondaire (3), vers un point spatial initial de référence prédéterminé.

12. Procédé selon l'une des revendications précédentes, d'après lequel des écarts par rapport à des points spatiaux prescrits de l'objet à souder (9), à savoir des points de soudage correspondants, sont relevés au moyen d'un dispositif de commande et/ou de régulation (11) du dispositif d'entraînement secondaire (3) et/ou du dispositif d'entraînement primaire (2), et sont transmis à une unité de traitement de données (12), notamment pour l'assurance qualité.

13. Procédé selon l'une des revendications précédentes, d'après lequel une modification physique des électrodes de soudage (7, 8) ou de parties des électrodes de soudage par usure, érosion de matériau, perte d'une électrode de soudage ou de parties de celle-ci ou similaires, lors de l'entrée en contact avec l'objet à souder (9) ou l'entrée en contact mutuel des branches de pince à souder (5, 6) ou des électrodes de soudage (7, 8), est relevée au moyen du dispositif de commande et/ou de régulation (11).

14. Procédé selon la revendication 13, d'après lequel le point spatial initial de référence est corrigé quant à la modification physique et/ou la modification est transmise à l'unité de traitement de données (12).

15. Procédé selon l'une des revendications précédentes, d'après lequel on fait pivoter le dispositif d'entraînement secondaire (3) par au moins deux entraînements individuels de la pince de soudage (4), sensiblement à l'intérieur d'un demi-espace.
